# FASCICULE DE BREVET EUROPEEN

(11) **EP 2 674 274 B1**
(45) Date de publication et mention de la délivrance du brevet: **28.01.2015**
(21) Numéro de dépôt: 13171048.5
(22) Date de dépôt: 07.06.2013
(51) Int. Cl.: B29C 33/06, B29C 45/14, B32B 21/14

(54) **Elément de garnissage et procédé de fabrication associé**
Verpackungselement und Verfahren zu seiner Herstellung
Packaging element and manufacturing thereof

(30) Priorité: 14.06.2012 FR 1255560
(43) Date de publication de la demande: 18.12.2013
(73) Titulaire: Faurecia Intérieur Industrie, 92000 Nanterre (FR)
(72) Inventeur: Durand, Nathalie, 01500 Amberieu en Bugey (FR); Piccin, Hugo, 82041 Deisenhofen (DE)
(74) Mandataire: Domenego, Bertrand

(56) Documents cités:
- EP-A1- 1 886 787
- WO-A1-2011/023899
- DE-A1- 19 914 092

## Description

La présente invention concerne un élément de garnissage de véhicule comprenant:
- un complexe comprenant au moins une couche de matériau ligneux ayant une face extérieure et une face intérieure, et une couche de renfort, s'étendant sur la face intérieure de la couche de matériau ligneux ; et
- un support réalisé dans une première matière plastique.

Dans les véhicules, par exemple les véhicules automobiles, les éléments de garnissage permettent d'améliorer l'aspect de l'habitacle en formant par exemple des panneaux, de porte ou autre, dont la surface visible est agencée pour conférer un aspect esthétique satisfaisant. A cet effet, on prévoit par exemple des éléments de garnissage dont la surface visible est formée par un matériau ligneux, tel que du bois. L'utilisation d'un élément de garnissage revêtu de bois confère un aspect luxueux à l'habitacle.

Le document FR-2 949 376 décrit un procédé de fabrication d'un élément de garnissage revêtu d'une couche de matériau ligneux, dans lequel un support en matière plastique est surmoulé directement sur l'envers d'un complexe constitué par au moins une couche de matériau ligneux, sur l'envers de laquelle est collée une couche de renfort, réalisée par exemple dans un matériau textile.

Un tel procédé ne donne pas entière satisfaction. En effet, le surmoulage du support nécessite d'injecter sur le complexe de la matière plastique à des pressions et températures élevées, ce qui risque de détériorer la couche de matériau ligneux, notamment en engendrant des traces de brûlures sur celle-ci, et par conséquent de détériorer l'aspect esthétique de l'élément de garnissage.

Un des buts de l'invention est de proposer un élément de garnissage comprenant un revêtement en matériau ligneux, peu coûteux et simple à réaliser, et qui présente un aspect esthétique satisfaisant.

A cet effet, l'invention a pour objet un élément de garnissage du type précité, dans lequel l'élément de garnissage comprend en outre au moins un insert, réalisé dans une deuxième matière plastique, interposé entre la couche de renfort du complexe et le support de manière à espacer le support de la couche de renfort, le support étant surmoulé par injection sur l'insert.

Selon des modes particuliers de réalisation, l'élément de garnissage présente l'une ou plusieurs des caractéristiques suivantes, prise(s) isolément ou suivant toute(s) combinaison(s) techniquement possible(s) :
- le complexe comprend en outre une couche de protection adhérant sur la face extérieure de la couche de matériau ligneux ;
- l'élément de garnissage présente une surface extérieure tridimensionnelle ;
- l'insert présente une épaisseur supérieure à 0,1 mm ;
- la deuxième matière plastique est choisie dans la liste constituée par : polyester, polyamide, polyéthylène, polypropylène, polycarbonate, acrylonitrile butadiène styrène, acrylique, polyméthacrylate de méthyle, polybutylène succinate, polybutylène téréphtalate, polypropylène téréphtalate (PPT), acide polylactique et mélanges d'au moins deux de ces matériaux ;
- la première et/ou la deuxième matières plastiques contiennent des fibres ; et
- le support comprend au moins un organe fonctionnel réalisé d'une seule pièce avec le support.

L'invention a également pour objet un procédé de fabrication d'un élément de garnissage, comprenant :
- la fourniture d'un insert réalisé en matière plastique ;
- la fourniture d'un complexe comprenant au moins une couche de matériau ligneux ayant une face extérieure et une face intérieure, et une couche de renfort s'étendant sur la face intérieure de la couche de matériau ligneux ;
- l'assemblage du complexe à l'insert pour former un ensemble intermédiaire ;
- la formation du support par moulage par injection de la matière plastique sur l'ensemble intermédiaire.

Selon d'autres modes de mise en oeuvre, le procédé comprend une ou plusieurs des caractéristiques suivantes, prise(s) isolément ou selon toutes les combinaisons techniquement possibles :
- l'insert est mis en forme séparément avant son assemblage au complexe ;
- l'élément de garnissage présente une surface extérieure tridimensionnelle et l'insert est mis en forme séparément selon sa forme tridimensionnelle finale dans l'élément de garnissage avant d'être assemblé au complexe ;
- l'insert est mis en forme par moulage par injection, par compression ou par thermocompression ; et
- l'insert est assemblé au complexe par pressage de l'insert contre le complexe.

L'invention sera mieux comprise à la lecture de la description qui va suivre, donnée uniquement à titre d'exemple et faite en référence aux dessins annexés, dans lesquels :
- la figure 1 est une représentation schématique en coupe d'un élément de garnissage selon l'invention ;
- les figures 2 à 4 sont des représentations schématiques du procédé de fabrication selon l'invention ; et
- la figure 5 est une représentation schématique analogue à la figure 2 d'une étape d'une variante du procédé de fabrication.

Dans la suite de la description, le terme « extérieur » est utilisé pour désigner la face d'un élément orientée du côté de la face visible de l'élément de garnissage et le terme « intérieur » est utilisé pour désigner la face d'un élément orientée à l'opposé de la face visible.

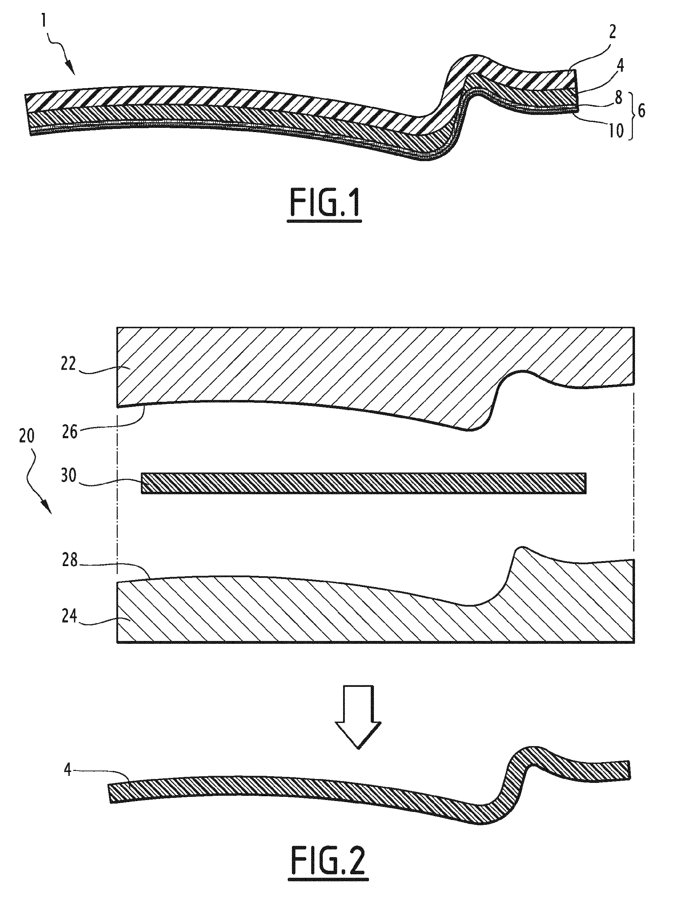

En référence à la figure 1, on décrit un élément de garnissage 1 comprenant de l'intérieur vers l'extérieur, un support 2, réalisé dans une première matière plastique, un insert 4, réalisé dans une deuxième matière plastique, et un complexe 6. Le complexe 6 forme la face visible de l'élément de garnissage 1. Il comprend, de l'intérieur vers l'extérieur, une couche de renfort 8 et au moins une couche de matériau ligneux 10. La face extérieure de l'insert 4 est appliquée contre la face intérieure du complexe 6, en particulier la face intérieure de la couche de renfort 8. La face intérieure de l'insert 4 est appliquée contre la face extérieure du support 2.

Un tel élément de garnissage 1 est par exemple destiné à former un panneau de garnissage de l'habitacle d'un véhicule, par exemple d'un véhicule automobile. Un tel panneau de garnissage est par exemple un panneau de porte ou un revêtement de planche de bord, ou autre.

L'élément de garnissage 1 présente par exemple une surface extérieure de forme tridimensionnelle. Cette forme tridimensionnelle est une forme développable ou non développable.

La couche de matériau ligneux 10 est visible depuis l'extérieur, par exemple depuis l'habitacle d'un véhicule. Il s'agit par exemple d'une couche de bois naturel. Tel que représenté sur la figure 1, le complexe 6 comprend une seule couche de matériau ligneux 10. En option, le complexe 6 comprend plusieurs couches de matériau ligneux 10 superposées et collées ensemble.

La couche de renfort 8 s'étend sur une face intérieure, ou face non visible, de la couche de matériau ligneux 10.

La couche de renfort 8 est réalisée dans un matériau non plastique.

La couche de renfort 8 est par exemple une couche en matériau textile, par exemple un tissu ou un non-tissé. Elle est éventuellement réalisée en papier ou en carton.

Elle a notamment pour fonction de renforcer la couche de matériau ligneux 10 sur sa face intérieure et éventuellement favoriser la liaison avec l'insert 4.

La couche de renfort 8 est par exemple contrecollée sur la face intérieure de la couche de matériau ligneux 10.

En option, le complexe 6 comprend une couche de protection (non représentée) s'étendant sur une face extérieure, ou face visible de la couche de matériau ligneux 10. La couche de protection est par exemple réalisée dans un matériau thermodurcissable ou thermoplastique. Cette couche de protection a notamment pour fonction de protéger la couche de matériau ligneux 10 contre les agressions extérieures, en particulier contre le rayonnement ultraviolet pouvant entraîner un vieillissement accéléré de la couche de matériau ligneux 10. La couche de protection est en outre conçue pour laisser la couche de matériau ligneux 10 visible depuis l'extérieur de l'élément de garnissage 1 en étant translucide ou transparente. Elle peut également être utilisée pour modifier l'aspect de l'élément de garnissage 1, par exemple en étant colorée ou particulièrement brillante.

L'insert 4 est interposé entre la couche de renfort 8 et le support 2. Il présente une face intérieure, appliquée contre une face extérieure du support 2, et une face extérieure, appliquée contre une face intérieure de la couche de renfort 8.

L'insert 4 est réalisé dans la deuxième matière plastique, par exemple en polyester, polyamide (PA), polyéthylène (PE), polypropylène (PP), polycarbonate (PC), acrylonitrile butadiène styrène (ABS), acrylique, polyméthacrylate de méthyle (PMMA), polybutylène succinate (PBS), polybutylène téréphtalate (PBT), polypropylène téréphtalate (PPT), acide polylactique (PLA) ou mélanges d'au moins deux de ces matériaux. Ces matériaux peuvent en outre être renforcés avec des fibres, telles que des fibres de verre ou de carbone ou des fibres naturelles, parmi des fibres d'origine végétale, notamment choisies dans le groupe constitué par le coton, le lin, le chanvre, le chanvre de Manille ou l'abaca, le bananier, le jute, la ramie, le raphia, le sisal, le genêt, le bambou, le miscanthus, le kenaf, le coco, l'agave, le sorgo, le switch-grass et le bois, et/ou des fibres d'origine animale, notamment choisies dans le groupe constitué par la laine, l'alpaga, le mohair, le cachemire, l'angora et la soie. La composition comprend un pourcentage très variable de fibres de 10% à 80%, selon leur nature, le procédé de mise en forme de l'insert 4 et la complexité géométrique de l'élément de garnissage.

L'insert 4 doit avoir un coefficient de dilation proche de celui du support 2 afin que ces couches aient des comportements mécaniques similaires, ce qui permet d'éviter les gauchissements de la pièce finie et aussi l'apparition de craquelures ou fissures sur la couche de matériau ligneux 10. L'insert 4 présente en particulier une épaisseur supérieure à 0,1 mm et de préférence comprise entre 1,5 et 2,2 mm.

Les première et deuxième matières plastiques peuvent être sensiblement identiques. Elles peuvent également être différentes.

L'insert 4 espace le support 2 du complexe 6, en particulier de la couche de renfort 8. Il protège ainsi le complexe 6 lors de la formation du support 2.

Le support 2 est formé sur la face intérieure de l'insert 4. Il est obtenu par moulage par injection de la première matière plastique sur l'insert 4. Le support 2 recouvre au moins partiellement l'insert 4. Dans la zone de recouvrement entre le support 2 et l'insert 4, la face extérieure du support 2 épouse la face intérieure de l'insert 4. Le support 2 peut comprendre des organes fonctionnels, par exemple des organes de fixation de l'élément de garnissage 1 à un panneau structurel métallique du véhicule. Ces organes fonctionnels sont venus de moulage avec le support 2. L'ajout de ces organes fonctionnels est rendu possible parce que le support 2 est réalisé par injection. De tels organes ne pourraient pas être prévus d'une seule pièce avec le support 2 si celui-ci était réalisé par compression.

La première matière plastique est de préférence choisie dans la liste constituée par : polyester, polyamide (PA), polyéthylène (PE), polypropylène (PP), polycarbonate (PC), acrylonitrile butadiène styrène (ABS), acrylique, polyméthacrylate de méthyle (PMMA), polybutylène succinate (PBS), polybutylène téréphtalate (PBT), polypropylène téréphtalate (PPT), acide polylactique (PLA) ou mélanges d'au moins deux de ces matériaux. Ces matériaux peuvent en outre être renforcés avec des fibres telles que des fibres de verre ou de carbone ou des fibres naturelles, parmi des fibres d'origine végétale, notamment choisies dans le groupe constitué par le coton, le lin, le chanvre, le chanvre de Manille ou l'abaca, le bananier, le jute, la ramie, le raphia, le sisal, le genêt, le bambou, le miscanthus, le kenaf, le coco, l'agave, le sorgo, le switch-grass et le bois, et/ou des fibres d'origine animale, notamment choisies dans le groupe constitué par la laine, l'alpaga, le mohair, le cachemire, l'angora et la soie. La composition comprend typiquement de 10 à 40%, notamment de 20 à 35%, de préférence de 25 à 30% en poids de fibres.

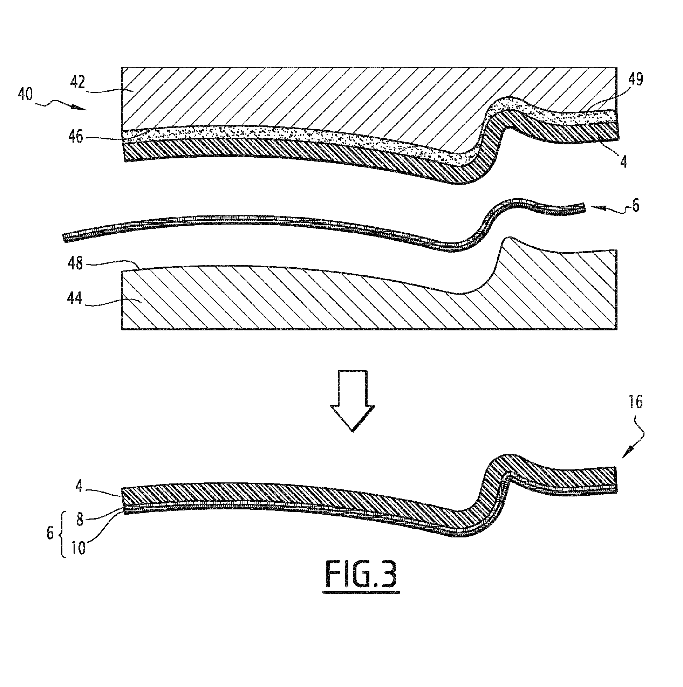

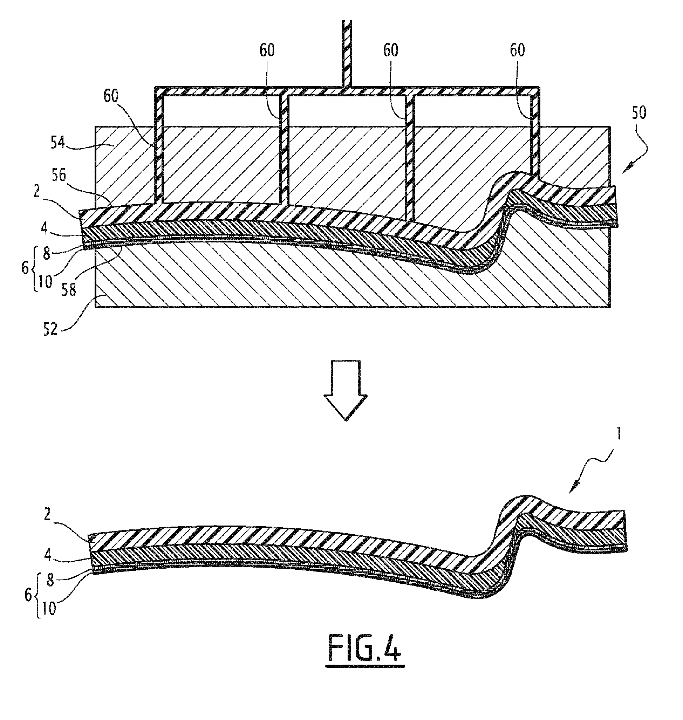

Le procédé de fabrication de l'élément de garnissage 1 est décrit par la suite en référence aux figures 2 à 4. Il comprend les étapes suivantes :
- Fourniture de l'insert 4 préformé. Par préformé, on entend que l'insert 4 présente lors de sa fourniture la forme finale qu'il présente dans l'élément de garnissage 1 (figure 2).
- Fourniture du complexe 6 ;
- Assemblage de l'insert 4 préformé au complexe 6 pour former un ensemble intermédiaire 16 (figure 3) ; puis
- Formation du support 2 sur l'ensemble intermédiaire 16, en particulier sur l'insert 4 de manière à obtenir l'élément de garnissage 1 (figure 4).

L'étape de fourniture de l'insert 4 comprend une étape de mise en forme de l'insert 4. Selon un premier mode de réalisation, l'insert 4 est mis en forme par moulage par compression dans un moule 20 de moulage par compression adapté. Un tel moule de moulage par compression, illustré sur la figure 2 dans une position d'ouverture, comprend, de manière classique, une première partie 22 de moule de moulage par compression et une deuxième partie 24 de moule de moulage par compression, mobiles l'une par rapport à l'autre entre une position d'ouverture du moule 20 et une position de fermeture du moule 20. La première partie 22 et la deuxième partie 24 comprennent respectivement une première surface de formage 26 et une deuxième surface de formage 28 de forme complémentaire correspondant à la forme finale souhaitée de l'insert 4. Dans la position de fermeture du moule 20, les surfaces de formage 26, 28 définissent entre elles une cavité de formage de forme correspondante à la forme souhaitée de l'insert 4.

L'étape de mise en forme de l'insert 4 est illustrée schématiquement sur la figure 2. Le moule de moulage par compression 20 est initialement ouvert. La matière première plastique 30 destinée à former l'insert 4 est alors introduite dans le moule 20. Dans l'exemple illustré sur la figure 2, elle est introduite dans le moule 20 sous forme de feuille par exemple en matériau thermoplastique ou thermodurcissable ou sous forme de SMC (« Sheet Molding Compound » en anglais), c'est-à-dire une feuille formée d'un mat pré-imprégné.

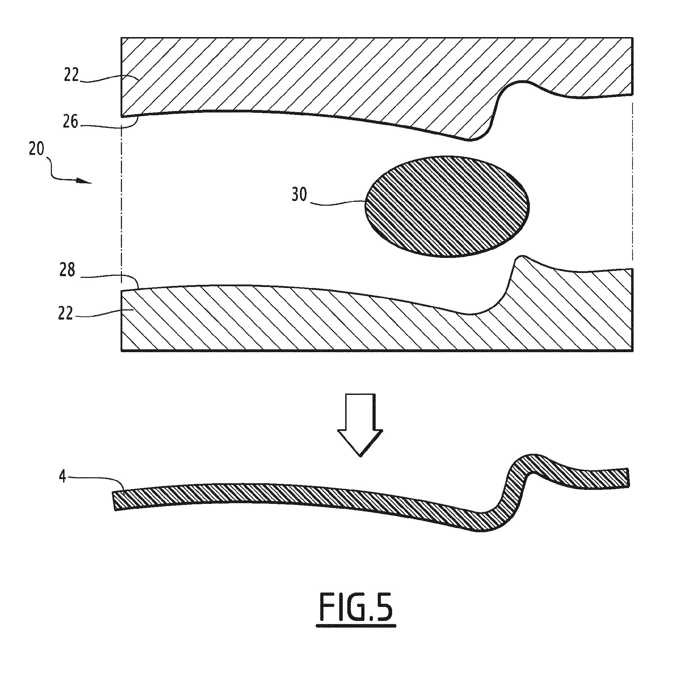

Dans la variante illustrée sur la figure 5, la matière première plastique 30 est introduite sous forme pâteuse, notamment sous forme de BMC (« Bulk Molding Compound » en anglais), c'est-à-dire une masse à mouler.

On ferme ensuite le moule 20, rapprochant ainsi les première et deuxième surfaces de formage 26, 28 l'une de l'autre. Du fait du rapprochement de ces surfaces 26, 28, la matière première plastique présente dans le moule 20 est comprimée et se répartit dans la cavité de formage.

Après refroidissement si nécessaire, le moule 20 est ouvert, et l'insert 4 ainsi obtenu est démoulé.

A l'issue de cette étape de mise en forme, on obtient un insert 4 préformé, présentant la forme définitive qu'il présente dans l'élément de garnissage 1.

Selon une variante, l'insert 4 préformé est obtenu de manière classique par moulage par injection au moyen d'un moule de moulage par injection présentant une cavité de moulage de forme adaptée. Selon cette variante, l'insert 4 est réalisé par injection simple ou par injection-compression.

L'étape de fourniture du complexe 6 comprend une étape de réalisation du complexe 6 à partir de la ou des couches de matériau ligneux 10 et de la couche de renfort 8. Le complexe 6 est fabriqué par solidarisation de la couche de matériau ligneux 10 à la couche de renfort 8 par tout procédé connu, par exemple par collage de la couche de renfort 8 sur la couche de matériau ligneux 10.

En option, on forme en outre la couche de protection sur la surface extérieure de la couche de matériau ligneux 10.

L'assemblage de l'insert 4 préformé au complexe 6 est réalisé par exemple par compression selon l'enseignement de la demande de brevet FR 2 929 880.

L'étape d'assemblage est représentée schématiquement sur la figure 3. Dans le mode de réalisation représenté, l'insert 4 préformé est assemblé au complexe 6 par compression ou par thermocompression. Cette compression ou thermocompression est réalisée au moyen d'un moule de compression 40 tel que représenté sur la figure 3. Le moule de compression 40 comprend une première partie 42 de moule de compression et une deuxième partie 44 de moule de compression comprenant chacune une surface de réception 46, 48 destinées à recevoir respectivement l'insert 4 préformé et le complexe 6. Les surfaces de réception 46, 48 sont disposées en regard l'une de l'autre. La première partie 42 de moule de compression est déplaçable vers la deuxième partie 44 de moule de compression afin de presser l'insert 4 et le complexe 6 l'un contre l'autre et les solidariser pour obtenir en sortie de moule l'ensemble intermédiaire 16.

La première partie 42 comprend des moyens de maintien (non représentés) de l'insert 4 contre sa surface de réception 46. Ces moyens de maintien sont par exemple des moyens d'aspiration de l'insert 4 contre la surface de réception 46. Dans ce cas, ils comprennent notamment des canaux d'aspiration traversant la première partie 42. La deuxième partie 44 comprend des moyens de fixation (non représentés), par exemple des crochets et des clips, propres à maintenir le complexe 6 contre sa surface de réception 48.

Dans le cas où l'assemblage est réalisé par thermocompression, le moule 40 comprend des moyens de chauffage (non représentés) d'au moins une des parties 42, 44 du moule 40 de sorte à assembler l'insert 4 au complexe 6 par thermocompression. Ces moyens de chauffage permettent par exemple de chauffer la partie 42, 44 du moule 40 dont la surface de réception 46, 48 est plus proche de la zone de contact entre l'insert 4 et le complexe 6. Les températures de chauffage sont par exemples supérieures à 90°C, et notamment supérieures à 130°C. Dans l'exemple représenté, la surface de réception 48 de la deuxième partie 44 est plus proche de la zone de contact entre l'insert 4 et le complexe 6. Les moyens de chauffage chauffent la surface de réception 48 de la deuxième partie 44 du moule 42.

La première partie 42 comprend, sur sa surface de réception 46, un revêtement 49 à base de résine fixé sur la surface de réception 46. L'insert 4 est destiné à être placé dans le moule 40 de manière à ce que sa face intérieure soit appliquée contre le revêtement 49 à base de résine. Le revêtement à base de résine 49 présente par exemple une épaisseur sensiblement comprise entre 1 et 10 mm selon les tolérances calculées à chaque endroit de la surface de réception 46. Le revêtement 49 présente par exemple une dureté sensiblement comprise entre 60 shore A et 100 shore A. Le revêtement 49 est résistant à des températures supérieures aux températures de fonctionnement du moule 40. Il s'agit par exemple d'un polymère à base de silicone ou de polyuréthane résistant à des températures supérieures à 90°C, et de préférence supérieures à 130°C. Le revêtement 49 ne présente pas de mémoire de forme, c'est-à-dire qu'il reprend sa forme initiale après chaque compression. Un tel revêtement 49 permet d'appliquer une pression uniforme sur l'ensemble de l'insert 4 lors de la compression. On évite ainsi un mauvais positionnement du complexe 6 par rapport à l'insert 4.

L'étape d'assemblage de l'insert 4 au complexe 6 illustrée sur la figure 3 se déroule comme suit.

L'insert 4 préformé est disposé sur la surface de réception 46 de la première partie 42 du moule de compression 40. La face intérieure de l'insert 4 est disposée contre la surface de réception 46, en particulier contre le revêtement 49 à base de résine prévu sur la surface de réception 46.

Le complexe 6 est disposé sur la surface de réception 48 de la deuxième partie 44 du moule 40. Sa face extérieure est disposée contre la surface de réception 48. Le complexe 6 est souple lorsqu'il est disposé dans le moule 40.

Avant la fermeture du moule 40, la face intérieure de la couche de renfort 8 est donc disposée en regard de la face extérieure de l'insert 4.

Le moule de compression 40 est ensuite fermé par rapprochement de ses première et deuxième parties 42 et 44. La surface de réception 48 est chauffée par l'intermédiaire des moyens de chauffage avant et pendant la fermeture du moule 40.

Une pression s'exerce ainsi sur l'insert 4 et le complexe 6, et l'insert 4 et le complexe 6 sont solidarisés par thermocompression, l'insert 4 adhérant à la couche de renfort 8. La fermeture du moule 40 engendre également une mise en forme du complexe 6.

Après refroidissement, le moule 40 est ouvert, et l'ensemble intermédiaire 16 est démoulé.

A l'issue de l'étape d'assemblage de l'insert 4 au complexe 6, on obtient alors un ensemble intermédiaire 16 de la forme souhaitée.

En variante, le moule 40 n'est pas chauffé. L'insert 4 et le complexe 6 sont solidarisés par compression. Un liant ou un matériau d'accroche peut être prévu sur la surface extérieure de l'insert 4.

L'ensemble intermédiaire 16 constitue un sous-ensemble de l'élément de garnissage 1. Il comprend l'insert 4, solidarisé au complexe 6. Plus particulièrement, dans l'ensemble intermédiaire 16, la face extérieure de l'insert 4 est appliquée contre la face intérieure du complexe 6, en particulier la face intérieure de la couche de renfort 8. A l'issue de l'étape d'assemblage, le sous-ensemble formé par l'insert 4 et le complexe 6 présente la forme définitive qu'il présente dans l'ensemble de garnissage 1. Au sein de l'ensemble intermédiaire 16, la face intérieure du complexe 6 présente une forme sensiblement complémentaire de celle de la face extérieure de l'insert 4. Dans l'ensemble intermédiaire, l'insert 4 adhère à la couche de renfort 8 du complexe 6.

L'étape d'assemblage du complexe 6 et de l'insert 4 pour former l'ensemble intermédiaire 16 est suivie d'une étape de formation du support 2 sur l'ensemble intermédiaire 16. Le support 2 est formé sur l'insert 4, en particulier sur la face intérieure de l'insert 4 opposée au complexe 6. Il est formé par moulage par injection. Ainsi, le support 2 est surmoulé par injection sur l'ensemble intermédiaire 16, plus particulièrement sur la face intérieure de l'insert 4.

L'étape de formation du support 2 est représentée sur la figure 4. Dans l'exemple représenté, le support 2 est formé sur l'ensemble intermédiaire 16 par injection de la première matière plastique dans un moule 50 de moulage par injection approprié. De manière classique, le moule de moulage par injection 50 comprend une première partie 52 de moule de moulage par injection et une deuxième partie 54 de moule de moulage par injection, mobiles l'une par rapport à l'autre. La première partie 52 de moule de moulage par injection et la deuxième partie 54 de moule de moulage par injection comprennent respectivement des surfaces 56, 58 en regard définissant entre elles une cavité de moulage lorsque le moule 50 est fermé. Sur la figure 4, le moule 50 est représenté dans sa position fermée.

De manière classique, la première partie 52 comprend des canaux d'amenée 60 pour injecter la première matière plastique dans la cavité de moulage. Les canaux d'amenée 60 débouchent sur la surface 56 de la première partie 52 de moule de moulage par injection. Cette surface 56 forme une surface de moulage.

La surface 58 de la deuxième partie 54 forme une surface de réception, destinée à recevoir l'ensemble intermédiaire 16. L'ensemble intermédiaire 16 est destiné à être disposé dans le moule 50 avec sa face extérieure appliquée contre la surface de réception 58. La surface de réception 58 de la deuxième partie 54 présente une forme sensiblement complémentaire de celle de l'ensemble intermédiaire 16. En position fermée du moule 50, un espace d'injection est ménagé entre la face intérieure de l'ensemble intermédiaire 16 et la surface de moulage 56 pour l'injection du support 2. Les canaux d'amenée 60 débouchent dans cet espace d'injection.

L'étape de formation du support 2 se déroule de la manière suivante. Initialement, le moule 50 est ouvert. L'ensemble intermédiaire 16 est disposé sur la surface de réception 58 du moule 50. La face intérieure de l'ensemble intermédiaire 16, à savoir la face intérieure de l'insert 4, est tournée vers la surface de moulage 56. La face extérieure de l'ensemble intermédiaire 16, à savoir la face extérieure du complexe 6, est tournée vers la surface de réception 58.

Selon un mode de réalisation, le support 2 est formé par injection simple. A cet effet, on ferme le moule 50 après avoir disposé l'ensemble intermédiaire 16 sur la surface de réception 58. On injecte ensuite la première matière plastique destinée à former le support 2 dans l'espace d'injection au moyen des canaux d'amenée 60 pour mouler par injection le support 2. La première matière plastique remplit l'espace d'injection et est injectée à une température comprise entre 150°C et 300°C, le moule étant à une température comprise entre 15°C et 90°C.

Après refroidissement jusqu'à une température de démoulage, le moule 50 est ouvert et l'élément de garnissage 1 ainsi obtenu est démoulé. A l'issue de cette étape, on obtient un élément de garnissage 1 tel que représenté sur la figure 1.

En variante, le support 2 est formé par injection-compression. Le procédé de formation du support 2 selon cette variante ne diffère de l'injection simple qu'en ce que l'on exerce une pression sur la première matière plastique injectée simultanément à l'injection ou après l'injection de cette dernière dans le moule 50. Ainsi, à titre d'exemple, on injecte la première matière plastique dans la cavité délimitée par la surface de moulage 56 et l'ensemble intermédiaire lorsque le moule 50 n'est pas encore entièrement fermé, puis on ferme le moule 50, réduisant ainsi les dimensions de la cavité de sorte à compresser la matière plastique injectée. Après refroidissement jusqu'à une température de démoulage, le moule 50 est ouvert et l'élément de garnissage 1 est démoulé.

Le surmoulage du support 2 sur l'ensemble intermédiaire 16 peut être réalisé selon l'enseignement de la demande de brevet FR 2 949 376.

L'interposition d'un insert en matière plastique entre le complexe comprenant la couche de matériau ligneux et le support surmoulé est avantageuse. En effet, la matière plastique est alors injectée sur l'insert, et non directement sur la couche textile du complexe comme dans l'état de la technique. L'insert protège ainsi la couche de matériau ligneux lors de l'injection, et évite la dégradation de cette couche, et, de ce fait, la détérioration de l'aspect esthétique de l'élément de garnissage. On obtient ainsi un élément de garnissage portant un revêtement d'aspect en bois d'aspect esthétique satisfaisant.

En outre, le procédé selon l'invention est automatisable, toutes les étapes pouvant être mises en oeuvre par une machine.

Enfin, l'élément de garnissage est peu coûteux. En effet, l'élément de garnissage 1 obtenu est fini et ne nécessite aucune étape de finition ultérieure, telle qu'un ponçage ou un vernissage de l'élément de garnissage. En outre, le procédé permet d'intégrer des éléments fonctionnels d'une seule pièce avec le support, ceci même pour réaliser des éléments de garnissage ayant une géométrie non-développable avec un compromis particulièrement satisfaisant entre la précision dimensionnelle et son poids.

## Revendications

1. Elément de garnissage (1) de véhicule comprenant :
- un complexe (6) comprenant au moins une couche de matériau ligneux (10) ayant une face extérieure et une face intérieure, et une couche de renfort (8), s'étendant sur la face intérieure de la couche de matériau ligneux (10) ; et
- un support (2) réalisé dans une première matière plastique,
**caractérisé en ce que** l'élément de garnissage (1) comprend en outre au moins un insert (4), réalisé dans une deuxième matière plastique, interposé entre la couche de renfort (8) du complexe (6) et le support (2) de manière à espacer le support (2) de la couche de renfort (8), le support (2) étant surmoulé par injection sur l'insert (4).

2. Elément de garnissage (1) selon la revendication 1, dans lequel le complexe (6) comprend en outre une couche de protection adhérant sur la face extérieure de la couche de matériau ligneux (10).

3. Elément de garnissage (1) selon la revendication 1 ou 2, l'élément de garnissage (1) présentant une surface extérieure tridimensionnelle.

4. Elément de garnissage (1) selon l'une quelconque des revendications précédentes, dans lequel l'insert (4) présente une épaisseur supérieure à 0,1 mm.

5. Elément de garnissage (1) selon l'une quelconque des revendications précédentes, dans lequel la deuxième matière plastique est choisie dans la liste constituée par : polyester, polyamide, polyéthylène, polypropylène, polycarbonate, acrylonitrile butadiène styrène, acrylique, polyméthacrylate de méthyle, polybutylène succinate, polybutylène téréphtalate, polypropylène téréphtalate (PPT), acide polylactique et mélanges d'au moins deux de ces matériaux.

6. Elément de garnissage (1) selon l'une quelconque des revendications 1 à 5, dans lequel la première et/ou la deuxième matières plastiques contiennent des fibres.

7. Elément de garnissage selon l'une quelconque des revendications 1 à 6, dans lequel le support (2) comprend au moins un organe fonctionnel réalisé d'une seule pièce avec le support (2).

8. Procédé de fabrication d'un élément de garnissage (1), comprenant :
- la fourniture d'un insert (4) réalisé en matière plastique ;
- la fourniture d'un complexe (6) comprenant au moins une couche de matériau ligneux (10) ayant une face extérieure et une face intérieure, et une couche de renfort (8) s'étendant sur la face intérieure de la couche de matériau ligneux (10) ;
- l'assemblage du complexe (6) à l'insert (4) pour former un ensemble intermédiaire (16) ;
- la formation du support (2) par moulage par injection de la matière plastique sur l'ensemble intermédiaire (16).

9. Procédé de fabrication selon la revendication 8, dans lequel l'insert (4) est mis en forme séparément avant son assemblage au complexe (6).

10. Procédé de fabrication selon l'une des revendications 8 et 9, dans lequel l'élément de garnissage (1) présente une surface extérieure tridimensionnelle et dans lequel l'insert (4) est mis en forme séparément selon sa forme tridimensionnelle finale dans l'élément de garnissage (1) avant d'être assemblé au complexe (6).

11. Procédé de fabrication selon l'une des revendications 8 à 10, dans lequel l'insert (4) est mis en forme par moulage par injection, par compression ou par thermocompression.

12. Procédé de fabrication selon l'une des revendications 8 à 11, dans lequel l'insert (4) est assemblé au complexe (6) par pressage de l'insert (4) contre le complexe (6).

## Patentansprüche

1. Verkleidungselement (1) für ein Fahrzeug, aufweisend:
- einen Komplex (6), der aufweist: mindestens eine Schicht aus einem Holzmaterial (10) mit einer Außenseite und einer Innenseite, und eine Verstärkungsschicht (8), die sich auf der Innenseite der Holzmaterialschicht (10) erstreckt, und
- eine Stütze (2), die aus einem ersten Kunststoff gebildet ist,
**dadurch gekennzeichnet, dass** das Verkleidungselement (1) ferner mindestens einen Einsatz (4) aufweist, der aus einem zweiten Kunststoff gebildet ist, der derart zwischen der Verstärkungsschicht (8) des Komplexes (6) und der Stütze (2) angeordnet ist, dass er die Stütze (2) in Abstand zu der Verstärkungsschicht (8) bringt, wobei die Stütze (2) auf den Einsatz (4) spritzgegossen ist.

2. Verkleidungselement (1) gemäß Anspruch 1, wobei der Komplex (6) ferner eine Schutzschicht aufweist, die an der Außenseite der Holzmaterialschicht (10) anhaftet.

3. Verkleidungselement (1) gemäß Anspruch 1 oder 2, wobei das Verkleidungselement (1) eine dreidimensionale Außenfläche aufweist.

4. Verkleidungselement (1) gemäß irgendeinem der vorhergehenden Ansprüche, wobei der Einsatz (4) eine Dicke von größer als 0,1 mm aufweist.

5. Verkleidungselement (1) gemäß irgendeinem der vorhergehenden Ansprüche, wobei der zweite Kunststoff aus der aus folgendem bestehenden Liste ausgewählt ist: Polyester, Polyamid, Polyethylen, Polypropylen, Polycarbonat, Acrylnitril-Butadien-Styrol, Acryl, Polymethylmethacrylat, Polybutylensuccinat, Polybutylenterephthalat, Polypropylenterephthalat (PPT), Polymilchsäure und Mischungen aus mindestens zwei der Materialien.

6. Verkleidungselement (1) gemäß irgendeinem der Ansprüche 1 bis 5, wobei der erste und/oder der zweite Kunststoff Fasern enthält/enthalten.

7. Verkleidungselement gemäß irgendeinem der Ansprüche 1 bis 6, wobei die Stütze (2) mindestens ein funktionelles Element aufweist, das einstückig mit der Stütze (2) ausgebildet ist.

8. Verfahren zum Herstellen eines Verkleidungselements (1), aufweisend:
- Bereitstellen eines aus Kunststoff gebildeten Einsatzes (4),
- Bereitstellen eines Komplexes (6), der aufweist: mindestens eine Schicht aus einem Holzmaterial (10) mit einer Außenseite und einer Innenseite, und eine Verstärkungsschicht (8), die sich auf der Innenseite der Holzmaterialschicht (10) erstreckt,
- Montieren des Komplexes (6) an dem Einsatz (4), um eine Zwischeneinheit (16) auszubilden,
- Ausbilden der Stütze (2) durch Spritzgießen des Kunststoffes auf die Zwischeneinheit (16).

9. Herstellungsverfahren gemäß Anspruch 8, wobei der Einsatz (4) vor seinem Montieren an dem Komplex (6) getrennt geformt wird.

10. Herstellungsverfahren gemäß einem der Ansprüche 8 und 9, wobei das Verkleidungselement (1) eine dreidimensionale Außenfläche aufweist, und wobei der Einsatz (4) gemäß seiner endgültigen dreidimensionalen Form in dem Verkleidungselement (1) geformt wird, bevor er an dem Komplex (6) montiert wird.

11. Herstellungsverfahren gemäß einem der Ansprüche 8 bis 10, wobei der Einsatz (4) durch Spritzgießen, durch Kompression oder durch Thermokompression geformt wird.

12. Herstellungsverfahren gemäß einem der Ansprüche 8 bis 11, wobei der Einsatz (4) durch Pressen des Einsatzes (4) gegen den Komplex (6) an dem Komplex (6) montiert wird.

## Claims

1. A vehicle trim element (1), comprising:
- a complex (6) comprising at least one layer of ligneous material (10) having an outer face and an inner face, and a reinforcing layer (8), extending over the inner face of the layer of ligneous material (10); and
- a substrate (2) made from a first plastic material,
**characterized in that** the trim element (1) further comprises at least one insert (4), made from a second plastic material, inserted between the reinforcing layer (8) of the complex (6) and the substrate (2) so as to space the substrate (2) away from the reinforcing layer (8), the substrate (2) being overmolded by injection on the insert (4).

2. The trim element (1) according to claim 1, wherein the complex (6) further comprises a protective layer adhering to the outer face of the layer of ligneous material (10).

3. The trim element (1) according to claim 1 or 2, the trim element (1) having a three-dimensional outer surface.

4. The trim element (1) according to any one of the preceding claims, wherein the insert (4) has a thickness greater than 0.1 mm.

5. The trim element (1) according to any one of the preceding claims, wherein the second plastic material is chosen from the list consisting of: polyester, polyamide, polyethylene, polypropylene, polycarbonate, acrylonitrile butadiene styrene, acrylic, poly(methyl methacrylate), polybutylene succinate, polybutylene terephthalate, polypropylene terephthalate (PPT), polylactic acid and mixtures of at least two of the aforementioned materials.

6. The trim element (1) according to any one of claims 1 to 5, wherein the first and/or second plastic materials contain fibers.

7. The trim element according to any one of claims 1 to 6, wherein the substrate (2) comprises at least one functional member made in a single piece with the substrate (2).

8. A method for manufacturing a trim element (1), comprising:
- providing an insert (4) made from a plastic material;
- providing a complex (6) comprising at least one layer of ligneous material (10) having an outer face and an inner face, and a reinforcing layer (8) extending over the inner face of the layer of ligneous material (10);
- assembling the complex (6) to the insert (4) to form an intermediate assembly (16);
- forming the substrate (2) by injection molding the plastic material on the intermediate assembly (16).

9. The manufacturing method according to claim 8, wherein the insert (4) is shaped separately before being assembled to the complex (6).

10. The manufacturing method according to one of claims 8 and 9, wherein the trim element (1) has a three-dimensional outer surface and wherein the insert (4) is shaped separately according to its final three-dimensional shape in the trim element (1) before being assembled to the complex (6).

11. The manufacturing method according to one of claims 8 to 10, wherein the insert (4) is shaped by injection molding, compression or thermocompression.

12. The manufacturing method according to one of claims 8 to 11, wherein the insert (4) is assembled to the complex (6) by pressing the insert (4) against the complex (6).
